# EUROPEAN PATENT APPLICATION

(11) **EP 4 057 025 A1**
(43) Date of publication of application: **14.09.2022**
(21) Application number: 22160384.8
(22) Date of filing: 07.03.2022
(51) Int. Cl.: G01S 7/481, G02B 26/10

(54) **OPTICAL SCANNING SYSTEM**

(30) Priority: 10.03.2021 CN 202110259603
(71) Applicant: Coretronic Corporation, Hsin-Chu 300 (TW)
(72) Inventor: PAN, HAW-WOEI, 300 Hsin-Chu (TW)
(74) Representative: Ter Meer Steinmeister & Partner

(57) **Abstract**

An optical scanning system (100), including a laser source (110), an optical module 120), a scanning reflection element (130), and a controller (140), is provided. The laser source is configured to emit a laser beam (B). The optical module is disposed on an optical path of the laser beam and has a first axial direction (C1) and a second axial direction (C2) perpendicular to each other. The laser beam is focused onto the scanning reflection element in the first axial direction, and is collimated and transmitted to the scanning reflection element in the second axial direction after passing through the optical module. The scanning reflection element reflects the laser beam to an object to be scanned and forms a one-dimensional scanning beam (SB) thereon. The controller is electrically connected to the scanning reflection element and controls an action thereof, so that the one-dimensional scanning beam scans the object to be scanned along a scanning direction (SD).

## Description

This application claims the priority benefit of China application serial no. 202110259603.3, filed on March 10, 2021.

### BACKGROUND

### Technical Field

The disclosure relates to an optical system, and particularly relates to an optical scanning system.

### Description of Related Art

Light (Laser) detection and ranging (LiDAR) is an optical remote sensing technology that measures parameters such as the distance to a target through irradiating a beam, usually a pulsed laser, to the target. LiDAR may measure the distance, recognize the appearance of objects, and establish the three-dimensional geographical information model of the surrounding with high precision. LiDAR has advantages such as long measurement distance, high precision, and high recognition. LiDAR is not affected by the brightness of the environment, and may sense information such as the shape and the distance of surrounding obstacles day and night to establish the three-dimensional geographical information model. LiDAR has applications in the fields of surveying and mapping, archaeology, geography, geomorphology, earthquake, forestry, remote sensing, atmospheric physics, etc. In addition, the technology is also used in specific applications such as airborne laser mapping, laser height measurement, and laser radar contour drawing.

In the field of autonomous cars, the sensing system may be able to accurately detect targets within 100 meters to 200 meters in various environments. Therefore, LiDAR is one of the necessary sensors for autonomous driving in development.

LiDAR may be divided into flash, two-dimensional raster-scan, and one-dimensional line-scan according to the laser scanning manner. The scanning manner of the flash LiDAR is similar to the flash of a camera, which irradiates a whole image at the same time. The scanning manner of the two-dimensional raster-scan LiDAR is similar to the cathode-ray tube (CRT) monitor, which raster-scans using light points emitted by a laser source to form a surface. One-dimensional line-scan LiDAR first expands a light source into a one-dimensional line, and then scans the other dimension to achieve a surface. The advantage of the flash LiDAR is the fast scanning speed, but the disadvantage is the short detection distance. The two-dimensional raster-scan LiDAR is the opposite of the flash LiDAR, and the advantage is the long detection distance, but the disadvantage is the slow scanning speed. The characteristics of the one-dimensional line scan LiDAR are somewhere in between the two.

The one-dimensional line-scan LiDAR module products currently on the market basically have two different implementation manners.

The first implementation manner is as follows. The light source is a laser array source that is vertically arranged and sequentially emits light. The laser source is an XY asymmetric optical element (usually a lenticular lens), which horizontally expands a "point" emitted by each laser source into a "line". The horizontal "line" is scanned into a surface with the vertically arranged laser array source. Most importantly, a light receiving part adopts a horizontally arranged photodiode array sensor to receive the reflected and scattered light of each "line" irradiated on a target object onto the sensor with a receiver lens.

The second implementation manner is as follows. A collimated laser (spot) emitted by a laser diode is horizontally scanned by a microelectromechanical systems (MEMS) micro-mirror into a "line". Then, the horizontal "line" is vertically drawn into a surface via a diffuser lens. A light receiving part adopts a vertically arranged photodiode array sensor to receive the reflected and scattered light of each "line" irradiated on a target object onto the sensor with a receiver lens.

However, the light source of the first implementation manner adopts the laser array, so the cost is more expensive. The light source of the second implementation manner adopts the laser diode, which may effectively reduce the cost but still requires further optical architecture optimization.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

The object of the invention is to provide an optical scanning system, which has a simple optical architecture and low cost.

The object is solved by the features of the independent claims. Preferred embodiments are given in the dependent claims.

An optical scanning system according to an embodiment of the disclosure includes a laser source, an optical module, a scanning reflection element, and a controller. The laser source is configured to emit a laser beam. The optical module is disposed on an optical path of the laser beam and has a first axial direction and a second axial direction perpendicular to each other. The laser beam is focused onto the scanning reflection element in the first axial direction, and is collimated and transmitted to the scanning reflection element in the second axial direction after passing through the optical module. The scanning reflection element is configured to reflect the laser beam to an object to be scanned and form a one-dimensional scanning beam on the object to be scanned. The controller is electrically connected to the scanning reflection element. The controller is configured to control an action of the scanning reflection element, so that the one-dimensional scanning beam scans the object to be scanned along a scanning direction.

In one or more embodiments, the laser source may comprise a vertical cavity surface emitting laser or an edge emitting laser.

In one or more embodiments, the scanning reflection element may comprise a microelectromechanical systems mirror, a galvo mirror, or a scrolling prism.

In one or more embodiments, the laser source may be a single laser diode.

In one or more embodiments, the one-dimensional scanning beam may form a strip-shaped light spot on a plane of the object to be scanned.

In one or more embodiments, a long side of the strip-shaped light spot may be perpendicular to the scanning direction.

In one or more embodiments, the optical scanning system may further comprise one or more or a plurality of sensing elements.

In one or more embodiments, the one or more or plurality of sensing elements may be disposed on a transmission path of the one-dimensional scanning beam after being reflected by the object to be scanned.

In one or more embodiments, the one or more or the plurality of sensing elements may be arranged in an array along the scanning direction.

In one or more embodiments, the laser beam emitted from the laser source may have a long axis and a short axis.

In one or more embodiments, in the optical path of the laser beam passing through the optical module, the long axis of the laser beam may be parallel to the first axial direction of the optical module, and/or the short axis may be parallel to the second axial direction of the optical module.

In one or more embodiments, a long axis of the one-dimensional scanning beam with the strip-shaped light spot may be perpendicular to the scanning direction.

In one or more embodiments, the scanning direction may be perpendicular to the first axial direction of the optical module.

In one or more embodiments, the optical module may comprise a collimation lens; and/or a lenticular lens.

In one or more embodiments, the lenticular lens may have a plano axis and a power axis.

In one or more embodiments, in the optical path of the laser beam passing through the lenticular lens, the long axis of the laser beam may be parallel to the power axis of the lenticular lens, and/or the short axis may be parallel to the plano axis of the lenticular lens.

In one or more embodiments, the collimation lens and the lenticular lens may be sequentially disposed between the laser source and the scanning reflection element.

Based on the above, in the optical scanning system according to an embodiment of the disclosure, since the scanning reflection element reflects the laser beam to the object to be scanned and forms the one-dimensional scanning beam on the object to be scanned, and the controller enables the one-dimensional scanning beam to scan the object to be scanned along the scanning direction, the optical scanning system may complete the scanning of a whole image under a simple optical architecture. Therefore, the cost of the optical scanning system according to the embodiment of the disclosure is lower.

Other objectives, features and advantages of the disclosure will be further understood from the further technological features disclosed by the embodiments of the disclosure wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of an optical scanning system of an embodiment of the disclosure.
FIG. 2A is a schematic diagram of an optical scanning system when a viewing angle is perpendicular to a second axial direction according to an embodiment of the disclosure.
FIG. 2B is a schematic diagram of the optical scanning system when the viewing angle is perpendicular to a first axial direction according to an embodiment of the disclosure.
FIG. 3 is a schematic diagram of an arrangement manner of sensing elements of an optical scanning system according to an embodiment of the disclosure.

### DETAILED DESCRIPTION OF DISCLOSED EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the disclosure can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

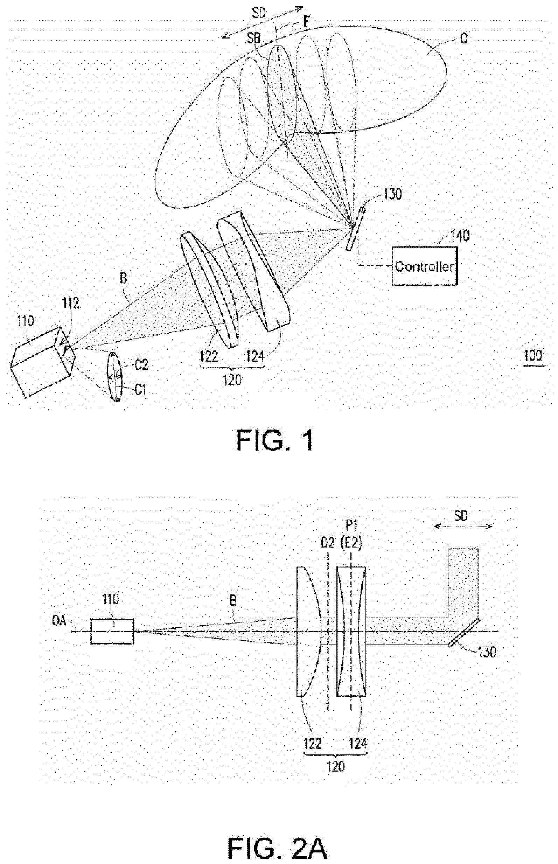

FIG. 1 is a schematic diagram of an optical scanning system according to an embodiment of the disclosure. Please refer to FIG. 1. An optical scanning system 100 according to an embodiment of the disclosure includes a laser source 110, an optical module 120, a scanning reflection element 130 and a controller 140.

In this embodiment, the laser source 110 is configured to emit a laser beam B. The laser source 110 may be a semiconductor laser source and may include a vertical cavity surface emitting laser (VCSEL) or an edge emitting laser (EEL). In an embodiment, the laser source 110 may be a single laser diode, which is beneficial to reducing the overall volume and weight of the optical scanning system 100 and reducing the cost of the optical scanning system 100.

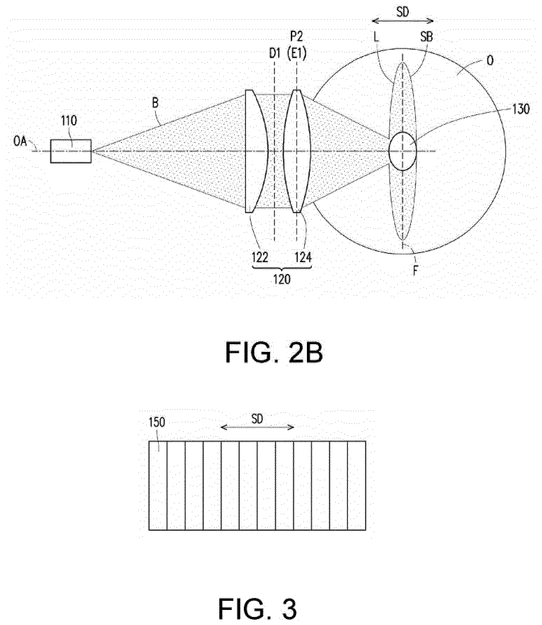

In this embodiment, the optical module 120 has an optical axis OA. A cross section of the laser beam B orthogonal to the optical axis OA has a long axis (such as a long axis D1 of FIG. 2B) and a short axis (such as a short axis D2 of FIG. 2A). At a light emitting surface 112 of the laser source 110, a divergence angle of the laser beam B in the long axis direction C1 is different from a divergence angle in the short axis direction C2. The laser beam B forms an ellipse at the cross section orthogonal to the optical axis OA. The long axis direction C1 and the short axis direction C2 of the laser beam B emitted by the laser source 110 at the light emitting surface 112 are respectively parallel to a short axis and a long axis of the laser beam B in a far field.

In this embodiment, the optical module 120 is disposed between the laser source 110 and the scanning reflection element 130, and the optical module 120 includes a collimation lens 122 and a lenticular lens 124. The lenticular lens 124 has a plano axis (such as a plano axis P1 of FIG. 2A) and a power axis (such as a power axis P2 of FIG. 2B). The plano axis is an axial direction of the lenticular lens 124 without refractive power, and the power axis is an axial direction of the lenticular lens 124 with positive refractive power. The collimation lens 122 and the lenticular lens 124 are sequentially disposed between the laser source 110 and the scanning reflection element 130 along the optical axis OA.

In this embodiment, the scanning reflection element 130 may include a microelectromechanical systems (MEMS) mirror, a galvo mirror, or a scrolling prism.

In this embodiment, the controller 140 includes, for example, a microcontroller unit (MCU), a central processing unit (CPU), a microprocessor, a digital signal processor (DSP), a programmable controller, a programmable logic device (PLD), other similar devices, or a combination of these devices, but the disclosure is not limited thereto. In addition, in an embodiment, functions of the controller 140 may be implemented as multiple program codes. The program codes are stored in a memory, and the controller 140 executes the program codes. Alternatively, in an embodiment, the functions of the controller 140 may be implemented as one or more circuits. The disclosure does not limit the manner of using software or hardware to implement the functions of the controller 140.

FIG. 2A is a schematic diagram of an optical scanning system when a viewing angle is perpendicular to a second axial direction according to an embodiment of the disclosure. FIG. 2B is a schematic diagram of the optical scanning system when the viewing angle is perpendicular to a first axial direction according to an embodiment of the disclosure. Please refer to FIG. 1, FIG. 2A, and FIG. 2B at the same time. In this embodiment, the optical module 120 is disposed on an optical path of the laser beam B and has a first axial direction E1 and a second axial direction E2 perpendicular to each other, and the first axial direction E1 and the second axial direction E2 are respectively perpendicular to the optical axis OA. In the optical path of the laser beam B passing through the optical module 120, the long axis D1 of the laser beam B is parallel to the first axial direction E1 of the optical module 120, and the short axis D2 is parallel to the second axial direction E2 of the optical module 120. The laser beam B is focused onto the scanning reflection element 130 in the first axial direction E1 after passing through the optical module 120, as shown in FIG. 2B. The laser beam B is collimated and transmitted to the scanning reflection element 130 in the second axial direction E2 after passing through the optical module 130, as shown in FIG. 2A. In detail, in the optical path of the laser beam B passing through the lenticular lens 124, the long axis D1 of the laser beam B is parallel to the power axis P2 of the lenticular lens 124 and the first axial direction E1 of the optical module 120, and the short axis D2 of the laser beam B is parallel to the plano axis P1 of the lenticular lens 124 and the second axial direction E2 of the optical module 120. The power axis P2 with positive refractive power of the lenticular lens 124 enables the laser beam B to be focused onto the scanning reflection element 130, and the plano axis P1 without refractive power of the lenticular lens 124 enables the laser beam B to be collimated to the scanning reflection element 130.

In this embodiment, the scanning reflection element 130 is configured to reflect the laser beam B to an object to be scanned O and form a one-dimensional scanning beam SB on the object to be scanned O. The controller 140 is electrically connected to the scanning reflection element 130 and the controller 140 is configured to control the action of the scanning reflection element 130, so that the one-dimensional scanning beam SB scans the object to be scanned O along a scanning direction SD. The one-dimensional scanning beam SB is a strip-shaped light spot on a plane of the object to be scanned O, and a long side L of the strip-shaped light spot is perpendicular to the scanning direction SD. Since the laser beam B forms a strip-shaped one-dimensional scanning beam SB on the object to be scanned O instead of a whole image, the sensing distance of the optical scanning system 100 according to the embodiment of the disclosure is longer, and the signal strength received by the optical scanning system 100 is also higher, which improves the signal-to-noise ratio of the optical scanning system 100. Moreover, the manner of controlling the action of the scanning reflection element 130 for the one-dimensional scanning beam SB to scan the object to be scanned O along the scanning direction SD also enables the scanning speed to be higher. Therefore, the frame rate of the optical scanning system 100 is also improved. In addition, the one-dimensional scanning beam SB may be an oblong-shaped light spot on the plane of the object to be scanned O, and a long side of the oblong-shaped light spot is perpendicular to the scanning direction SD.

In this embodiment, the scanning direction SD is perpendicular to the first axial direction E1 of the optical module 120 and is perpendicular to the short axis direction C2 of the laser beam B at the light emitting surface of the laser source 110 (as shown in FIG. 1).

In this embodiment, a long axis F of the one-dimensional scanning beam SB with the strip-shaped light spot (or the oblong-shaped light spot) is perpendicular to the scanning direction SD.

FIG. 3 is a schematic diagram of an arrangement manner of sensing elements of an optical scanning system according to an embodiment of the disclosure. Please refer to FIG. 3. In this embodiment, the optical scanning system 100 further includes multiple sensing elements 150. The sensing elements 150 are disposed on a transmission path of the one-dimensional scanning beam SB after being reflected by the object to be scanned O. The sensing elements 150 are arranged in an array along the scanning direction SD. In this embodiment, the sensing element 150 may be an optical sensing element of a complementary metal-oxide-semiconductor (CMOS), a charge coupled device (CCD), or a photodiode array, but the disclosure is not limited thereto. Each sensing element 150 may include multiple sensing pixels. The sensing pixels are, for example, arranged in a pixel array. An arrangement direction of the sensing pixels is perpendicular to the scanning direction SD.

In summary, in the optical scanning system according to the embodiment of the disclosure, the laser beam is focused onto the scanning reflection element in the first axial direction, and is collimated and transmitted to the scanning reflection element in the second axial direction after passing through the optical module. Since the scanning reflection element reflects the laser beam to the object to be scanned and forms the one-dimensional scanning beam on the object to be scanned, and the controller enables the one-dimensional scanning beam to scan the object to be scanned along the scanning direction, the optical scanning system may complete the scanning of a whole image under a simple optical architecture. Therefore, the optical scanning system according to the embodiment of the disclosure has the advantages of fast scanning speed and lower cost.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the disclosure" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be configured to interpret or limit the scope or meaning of the claims. Any advantages and benefits described may not apply to all embodiments of the invention. It should be appreciated that variations may be made in the embodiments described by persons skilled in the art without departing from the scope of the disclosure as defined by the following claims. Moreover, no element and component in the present disclosure is intended to be dedicated to the public regardless of whether the element or component is explicitly recited in the following claims.

## Claims

1. An optical scanning system (100), comprising a laser source (110), an optical module (120), a scanning reflection element (130), and a controller (140), wherein:
the laser source (110) is configured to emit a laser beam (B);
the optical module (120) is disposed on an optical path of the laser beam (B) and has a first axial direction (E1) and a second axial direction (E2) perpendicular to each other, the laser beam (B) is focused onto the scanning reflection element (130) in the first axial direction (E1), and is collimated and transmitted to the scanning reflection element (130) in the second axial direction (E2) after passing through the optical module (120);
the scanning reflection element (130) is configured to reflect the laser beam (B) to an object (O) to be scanned and form a one-dimensional scanning beam (SB) on the object (O) to be scanned; and
the controller (140) is electrically connected to the scanning reflection element (130) and the controller (140) is configured to control an action of the scanning reflection element (130), so that the one-dimensional scanning beam (SB) scans the object (O) to be scanned along a scanning direction (SD).

2. The optical scanning system (100) according to claim 1, wherein the laser source (110) comprises a vertical cavity surface emitting laser (VCSEL) or an edge emitting laser (EEL).

3. The optical scanning system (100) according to claim 1 or 2, wherein the scanning reflection element (130) comprises at least one of a microelectromechanical systems mirror, a galvo mirror, or a scrolling prism.

4. The optical scanning system (100) according to any one of the preceding claims, wherein the laser source (110) is a single laser diode.

5. The optical scanning system (100) according to any one of the preceding claims, wherein the one-dimensional scanning beam (SB) forms a strip-shaped light spot on a plane of the object (O) to be scanned, and a long side of the strip-shaped light spot is perpendicular to the scanning direction (SD).

6. The optical scanning system (100) according to any one of the preceding claims, further comprising one or more or a plurality of sensing elements (150), disposed on a transmission path of the one-dimensional scanning beam (SB) after being reflected by the object (O) to be scanned.

7. The optical scanning system (100) according to claim 6, wherein the plurality of sensing elements (150) are arranged in an array along the scanning direction (SD).

8. The optical scanning system (100) according to any one of the preceding claims, wherein the laser beam (B) emitted from the laser source (110) has a long axis (D1) and a short axis (D2).

9. The optical scanning system (100) according to claim 8, wherein in the optical path of the laser beam (B) passing through the optical module (120), the long axis (D1) of the laser beam (B) is parallel to the first axial direction (E1) of the optical module (120), and the short axis (D2) is parallel to the second axial direction (E2) of the optical module (120).

10. The optical scanning system (100) according to any one of the preceding claims 5-9, wherein a long axis (F) of the one-dimensional scanning beam (SB) with the strip-shaped light spot is perpendicular to the scanning direction (SD).

11. The optical scanning system (100) according to any one of the preceding claims, wherein the scanning direction (SD) is perpendicular to the first axial direction (E1) of the optical module (120).

12. The optical scanning system (100) according to any one of the preceding claims, wherein the optical module (120) comprises at least one of a collimation lens (122) and a lenticular lens (124).

13. The optical scanning system (100) according to claim 12, wherein the lenticular lens (124) has a plano axis (P1) and a power axis (P2).

14. The optical scanning system (100) according to claim 13, wherein in the optical path of the laser beam (B) passing through the lenticular lens (124), the long axis (D1) of the laser beam (B) is parallel to the power axis (P2) of the lenticular lens (124), and the short axis (D2) is parallel to the plano axis (P1) of the lenticular lens (124).

15. The optical scanning system (100) according to any one of the claims 12-14, wherein the collimation lens (122) and the lenticular lens (124) are sequentially disposed between the laser source (110) and the scanning reflection element (130).
